# NEUE EUROPÄISCHE PATENTSCHRIFT

(11) **EP 1 498 324 B2**
(45) Veröffentlichungstag und Bekanntmachung des Hinweises auf die Entscheidung über den Einspruch: **08.01.2014**
(45) Hinweis auf die Patenterteilung: 28.06.2006
(21) Anmeldenummer: 04013653.3
(22) Anmeldetag: 09.06.2004
(51) Int. Cl.: B60R 22/24

(54) **Umlenkbeschlag für einen Sicherheitsgurt**
Seat belt guide loop
Ferrure de renvoi pour ceinture de sécurité

(30) Priorität: 17.07.2003 DE 10332535
(43) Veröffentlichungstag der Anmeldung: 19.01.2005
(73) Patentinhaber: TRW Automotive GmbH, 73553 Alfdorf (DE)
(72) Erfinder: Möndel, Karl, 73529 Schwäbisch Gmünd (DE); Malbrich, Gerhard, 74417 Gschwend (DE)
(74) Vertreter: Mehnert, Bernhard

(56) Entgegenhaltungen:
- EP-B1- 0 689 973
- WO-A1-2005/021338
- DE-A1- 3 328 271
- DE-C- 10 153 062
- DE-C- 19 841 328
- JP-A- 2000 142 317

## Beschreibung

Die Erfindung betrifft einen Umlenkbeschlag für einen Sicherheitsgurt.

Ein Umlenkbeschlag mit einem Trägerblech, das eine Montageöffnung und eine Öse zur Durchführung des Sicherheitsgurts aufweist, einer an die Einbausituation des Umlenkbeschlags angepaßten Abdeckung aus Kunststoff zur Berandung des Trägerblechs, und einem Adapter aus Kunststoff, der einen in die Montageöffnung eingesetzten Kragenabschnitt und einen in die Öse eingesetzten Begrenzungsabschnitt aufweist, ist aus der DE 101 53 062 C1 bekannt. Ein solcher Umlenkbeschlag, hat den Vorteil, daß das Trägerblech als Standardbauteil ausgeführt werden kann, da die Anpassung an die konkrete Einbausituation in einem Fahrzeug ausschließlich über die Ausgestaltung der Abdeckung erfolgt. Bei dem in der DE 101 53 062 C1 gezeigten Umlenkbeschlag sind zwei Halbprofile aus Kunststoff vorgesehen, die seitlich auf ein Randprofil des Trägerblechs aufgeschoben und mittels einer Steckverbindung aneinander gekoppelt werden.

Ein Umlenkbeschlag mit den Merkmalen des Oberbegriffs des Anspruchs 1 ist aus der DE 198 41 328 C1 bekannt. Das Trägerteil besteht aus einem Stangenmaterial, dessen Enden eine Montageöffnung bzw. eine Öse zur Durchführung des Sicherheitsgurts bilden.

Die Erfindung schafft einen Umlenkbeschlag, der kostengünstiger herstellbar ist und eine längere Haltbarkeit aufweist.

Bei einem Umlenkbeschlag der eingangs genannten Art wird dies erfindungsgemaß durch die kennzeichnenden Merkmale des Anspruchs 1 erreicht. Das Vorsehen einer einstückigen Abdeckung reduziert die Anzahl der Bauteile und damit auch die Anzahl der für die Herstellung des Umlenkbeschlags notwendigen Spritzwerkzeuge. Die Anzahl der Montageschritte ist ebenfalls geringer, da zur Abdeckung des Trägerblechs nur ein Teil fixiert werden muß. Darüber hinaus weist der erfindungsgemäße Umlenkbeschlag im Gurtbandbereich keine Steckverbindungsstelle oder dergleichen auf, so daß ein Abrutschen der Abdeckung vom Trägerblech durch ein ungewolltes Öffnen einer solchen Steckverbindung ausgeschlossen ist. Durch die Möglichkeit, die Abdeckung flexibel zu gestalten, ist der erfindungsgemäße Umlenkbeschlag sowohl für eine verdeckten als auch für einen sichtbaren Einbau geeignet.

Die Abdeckung ist als fertiges Teil auf das Trägerblech aufgeklippt.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:

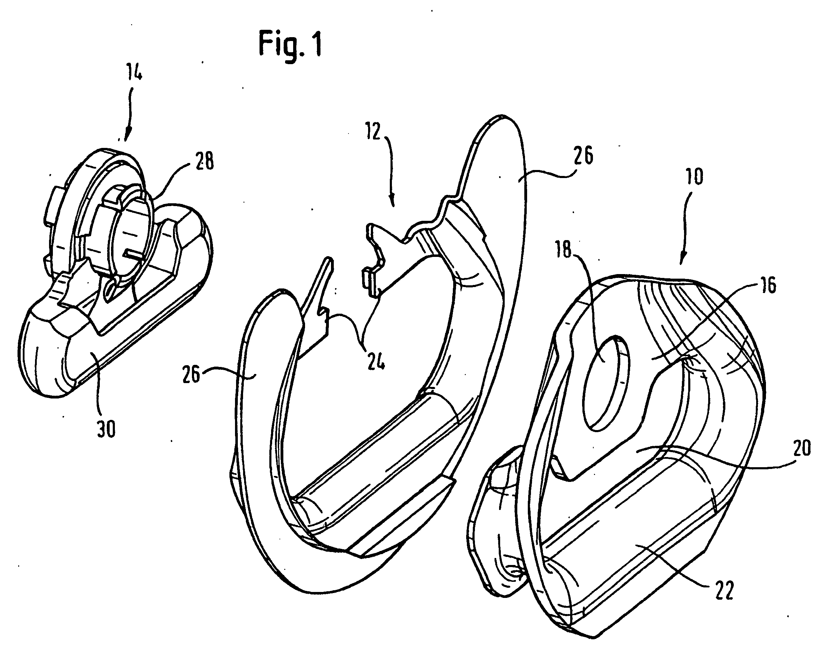

- Figur 1 eine perspektivische Explosionsansicht eines erfindungsgemäßen Umlenkbeschlags;
- Figur 2 eine perspektivische Vorderansicht des Umlenkbeschlags; und
- Figur 3 eine perspektivische Rückansicht des Umlenkbeschlags.

Der in den Figuren dargestellte Umlenkbeschlag für einen Sicherheitsgurt umfaßt im wesentlichen drei Bauteile: ein Trägerblech 10, eine Abdeckung 12 und einen Adapter 14. Das Trägerblech 10 ist bei allen Ausführungsformen ein von der konkreten Einbausituation des Umlenkbeschlags unabhängiges Standardbauteil, das eine in einem Montagebereich 16 gebildete Öffnung 18 und eine längliche Öse aufweist, durch die der Sicherheitsgurt hindurchgefuhrt werden kann. Der die Öse 20 am unteren und an den seitlichen Rändern umgebende Bereich des Trägerblechs 10 bildet einen Führungsabschnitt 22 mit einer Lauffläche für den Sicherheitsgurt.

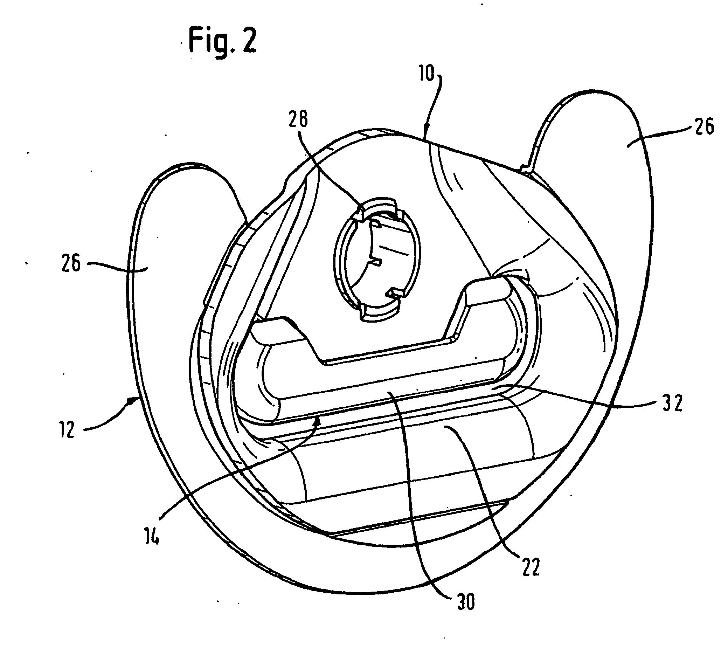

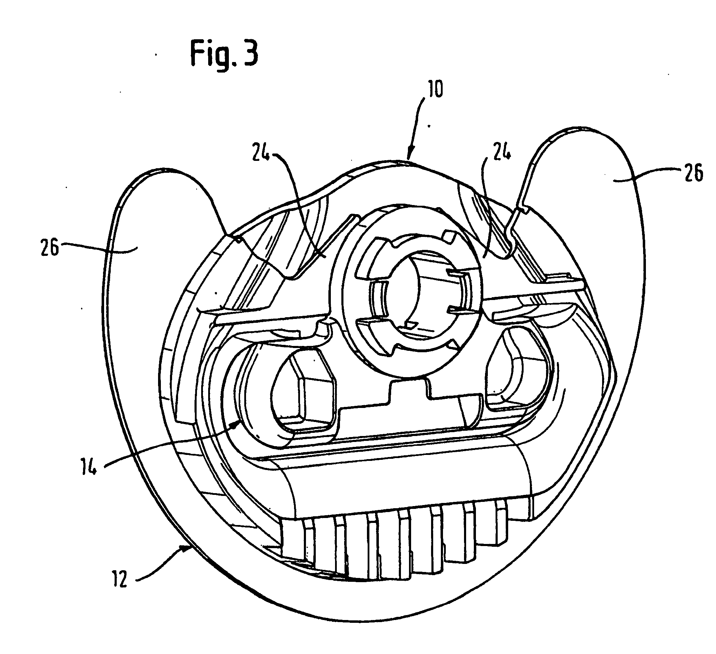

Die einstückig ausgeführte Abdeckung 12 zur Berandung des Trägerblechs 10 umgibt den unteren und die seitlichen Außenrandbereiche des Trägerblechs 10 (siehe Figuren 2 und 3). Die Abdeckung 12 weist zwei sich am Montagebereich 16 des Trägerblechs 10 abstützende Halteabschnitte 24 (siehe Figur 3) und zwei seitlich abstehende Sichtblenden 26 auf. Die Form der Abdeckung 12, insbesondere die der Sichtblenden 26, ist an die konkrete Einbausituation im Fahrzeug angepaßt. Die Abdeckung 12 ist als gespritztes Kunststoffteil ausgeführt, das auf das Trägerblech 10 aufgeklippt wird.

Komplettiert wird der erfindungsgemäße Umlenkbeschlag durch den Adapter 14, der einen buchsenartigen Kragenabschnitt 28 und einen wulstartigen Begrenzungsabschnitt 30 aufweist. Im zusammengebauten Zustand des Umlenkbeschlags sind der Kragenabschnitt 28 und der Begrenzungsabschnitt 30 in die Montageöffnung 18 bzw. in dem oberen Bereich der Gurtöse 20 des Trägerblechs 10 eingesetzt. Der Begrenzungsabschnitt 30 des Adapters 14 begrenzt die Abmessungen der Öse 20 in dem dem Gurtführungsabschnitt 22 gegenüberliegenden Bereich und legt so einen definierten Schlitz 32 für den Sicherheitsgurt fest. Der Adapter 14 ist ebenso wie die Abdeckung 12 ein Kunststoffteil, das auf das Trägerblech 10 aufgeklippt wird, wobei der Adapter 14 die Abdeckung 12 beim Zusammenbau des Umlenkbeschlags fixiert.

Die beiden Kunststoffteile (Abdeckung 12 und Adapter 14) sind so ausgelegt, daß sie im eingebauten Zustand die Schwenkbewegung des Umlenkbeschlags begrenzen.

## Patentansprüche

1. Umlenkbeschlag für einen Sicherheitsgurt, mit
einem Trägerteil (10), das eine Montageöffnung (18) und eine Öse (20) zur Durchführung des Sicherheitsgurts aufweist,
einer als einstückiges Bauteil ausgeführten Abdeckung (12) aus Kunststoff zur Berandung des Trägerteils (10), wobei die Abdeckung (12) den unteren Außenrandbereich des Trägerteils (10) umgibt, und
einem Adapter (14) aus Kunststoff, der einen in die Montageöffnung (18) eingesetzten Kragenabschnitt (28) und einen in die Öse (20) eingesetzten Begrenzungsabschnitt (30) aufweist,
**dadurch gekennzeichnet, daß** das Trägerteil als Trägerblech (10) ausgeführt ist, daß die Abdeckung (12) auch die seitlichen Außenrandbereiche des Trägerblechs (10) umgibt und an die Einbausituation des Umlenkbeschlags angepaßt ist, und daß der Adapter (14) die Abdeckung (12) auf dem Trägerblech fixiert; wobei die Abdeckung (12) auf das Trägerblech (10) aufgeklippt ist und wobei der Adapter (14) auf das Trägerblech (10) aufgeklippt ist.

## Claims

1. A deflection fitting for a safety belt, comprising
a carrier part (10) having a mounting opening (18) and an eye (20) for the safety belt to pass through,
a covering (12) of plastic, designed as a component made of a single piece, for framing the carrier part (10), the covering (12) surrounding the lower region of the outer edge of the carrier part (10), and
an adapter (14) of plastic, having a collar section (28) inserted in the mounting opening (18) and a delimiting section (30) inserted in the eye (20),
**characterized in that** the carrier part is configured as a carrier plate (10), that the covering (12) also surrounds the lateral regions of the outer edge of the carrier plate (10) and is adapted to the installation situation of the deflection fitting, and that the adapter (14) fixes the covering (12) on the carrier plate, wherein
the covering (12) is clipped onto the carrier plate (10) and, wherein
the adapter (14) is clipped onto the carrier plate (10).

## Revendications

1. Ferrure de renvoi pour une ceinture de sécurité, comportant
une partie de support (10) qui présente une ouverture de montage (18) et un oeillet (20) pour faire passer la ceinture de sécurité,
un couvercle (12) en matière plastique, réalise en tant que composant d'un seul tenant, pour border la partie de support (10), le couvercle (12) entourant la zone inferieure de bord extérieur de la partie de support (10), et
un adaptateur (14) en matière plastique qui présente un tronçon de collerette (28) inséré dans l'ouverture de montage (18) et un tronçon de délimitation (30) inséré dans l'oeillet (20),
**caractérisée en ce que** la partie de support est réalisée sous forme de tôle de support (10), **en ce que** le couvercle (12) entoure également les zones latérales de bord extérieur de la tôle de support (10) et est adapte à la situation de montage de la ferrure de renvoi, et **en ce que** l'adaptateur (14) fixe le couvercle sur la tôle de support, et **en ce que**
le couvercle (12) est clipsé sur la tôle de support (10), et **en ce que** l'adaptateur (14) est clipsé sur la tôle de support (10).
